# EUROPEAN PATENT SPECIFICATION

(11) **EP 0 294 810 B1**
(45) Date of publication and mention of the grant of the patent: **20.04.1994**
(21) Application number: 88109212.6
(22) Date of filing: 09.06.1988
(51) Int. Cl.: C09D 9/00

(54) **Method for detackifying paint in a paint spray booth**
Abbeiz-Zusammensetzung auf der Basis von Melamin-Formaldehyd/Styrol-Acrylat
Composition de décapage à base de mélamine-formaldéhyde/styrène-acrylate

(30) Priority: 12.06.1987 US 62526
(43) Date of publication of application: 14.12.1988
(73) Proprietor: NALCO CHEMICAL COMPANY, Naperville Illinois 6566-1024 (US)
(72) Inventor: Kiss, Charles R., Asstabula, OH 44004 (US); Huang, Shu-Jen Wu, Naperville, IL 60540 (US)
(74) Representative: Ruschke, Hans Edvard, Dipl.-Ing.

(56) References cited:
- US-A- 4 629 572
- US-A- 4 656 059

## Description

### Field of the Invention

The present invention relates to a method for detackifying paint in a paint spray booth.

### Background of the Invention

In the 1980's the paint technology in the automotive industry, as well as, industry in general has advanced from the utilization of low dispersion lacquers to high solids enamels. This has been due to a need to reduce solvent emission and disposal. These high solid enamels are particularly useful in basecoat/clearcoat technology.

As the paint technology has advanced, more emphasis has been on spray booth detackifiers as high solid enamels are much harder to detackify than low dispersion lacquers.

From US-A-4 656 059 a method for the treatment of a wet-spray booth is known wherein a melamine-aldehyde acid colloid solution is used as wet-spray booth treating agent. Said melamine-aldehyde acid colloid solution is added to the circulating water in an amount in the range of from 1 000 to 3 000 000 ppm based on the amount of the paint to be treated.

US-A-4 629 572 discloses a process for detackifying spray booth wastes comprised of oil-based coating particles which are substantially free of insoluble pigments and fillers which have been collected in a water wash stream and clarifying the waste-containing water wash stream by adding and maintaining in the wash water stream at least about 5 ppm of a melamine-formaldehyde resin and at least about 10 ppm of a water-swellable clay like bentonite.

However, the detackifying effect of these known processes is still unsatisfactory.

Thus, it is an object of this invention to provide a detackifier that can kill automotive basecoat/clearcoat paints and stay non-sticky troughout the whole process, that will provide a detackified paint sludge having minimum volume and high dewaterability, and that has a low toxicity.

### Summary of the Invention

It has been found that this object can be achieved according to the present invention by using a melamine-formaldehyde polycondensate and styrene-acrylate copolymer mixture, containing said melamine-formaldehyde polycondensate and said styrene-acrylate copolymer in a mole ratio in the range of from 2:1 to 4:1.

The subject-matter of the present invention is a method for detackifying paint in a paint spray booth comprising the steps of dosing a paint spray booth collection system with at least 25 ppm of a melamine-formaldehyde polycondensate and styrene-acrylate copolymer mixture, containing said melamine-formaldehyde polycondensate and said styrene-acrylate copolymer in a mole ratio in the range of from 2:1 to 4:1.

Preferably the above mixture is provided in an aqueous system at a dosage of at least 25 ppm and at most 800 ppm.

### Discussion of the Invention

In practice, a suitable melamine-formaldehyde resin available under the trademark MAGNIFLOC 515C® (a trademark of the American Cyanamid Company) in used according to the invention. Generally, suitable melamine-formaldehyde resins should have a weight average molecular weight of at least 2 000 and be soluble in water at pH below 2.5. Preferably, the molecular weight will be in the range of from 2 500 to 4 000.

The molecular weight is defined here to be the weight average molecular weight.

A suitable styrene-acrylate resin is available under the trademark ESICRYL R-11®, (a trademark of the Emulsion System Company) or OPACIFIER 11® (a trademark of the Essential Chemical Company). Any styrene-acrylate resins generally can be used according to the invention. However, the most preferred will have a molecular weight within the range of from 50 000 to 100 000.

Generally, the styrene-acrylate copolymer is prepared separately and packaged separately from the melamine-formaldehyde polycondensate. The two are then charged into the system. The styrene-acrylate-copolymer can be used as purchased. The melamine-formaldehyde polycondensate can also be used as purchased.

### Laboratory Test

Laboratory tests were conducted using a clay/amine product which is a standard in the industry today, representing over 60 % of the U.S. detackifying market for high density paint systems.

Desired amounts of detackifiers were added to the water manually or using a chemical pump to monitor the chemical demand. These detackifiers were allowed to mix in the tank through water circulation for 5 minutes. The paint being tested was then sprayed into the chamber at a rate of 2 ml/min through an air atomized spray gun located 30,48 cm (12 inches) above the center of the scrubbing section. An exhaust fan pulling air from the lower section of the scrubbing chamber helped the air flow thourgh the water and increased scrubbing efficiency. This exhaust fan also aided in eliminating paint mist during the test and made the whole unit operable in that atmosphere.

The test paint was sprayed for 10 minutes and the paint kill then tested for tackiness or stickiness. Tackiness or stickiness was determined by wetting the test runner's hand by the water solution in the test tank and taking a sample of the floating paint sludge from the water tank and squeezing and rubbing it lightly between his fingers until a degree tackiness is determined. The test is somewhat subjective. However, that is the best method that is currently available.

In general, at the conclusion of a good paint kill, paint is continuously sprayed, and the paint sludge conditions are tested every 10 minutes. At any given time, if any trace of tackiness of sludge is present, paint spray is discontinued and the program re-examined. The amount of paint sprayed, the chemical dosage, and condition of sludge are recorded.

Additional chemicals are added and paint spray resumed. This process was repeated at least four times.

Let's take a hypothetical example of the test in order to see how the product maintenance ratio is calculated:

| mls of paint sprayed | mls of chemicals added | Comments |
|---|---|---|
| 0 | 57 ml (or 3 000 ppm) | Start spraying initial kill #8 |
| 120 | 19 | Final kill #6 recharge chemicals |
| 60 | 19 | Recharge chemicals |
| 55 | 19 | Recharge chemicals |
| 67 | | Finish sprayed |

In this case, the initial charge of chemicals is 19 ml or 1000 ppm (based on 18,9 l (5 gallons) of water) and the product maintenance ratio is 3:1 paint/product.

In the following tests, the maintenance ratio represents the ratio of paint to product required to maintain acceptable levels of tackiness or stickiness for the paint kill.

### Test 1 (Prior art)

Paint: DuPont 706-AC 301® white base coat
Wt.% solids: 59 %
Spray Rate: 2,0 ml/min
Water recirculation rate: 2 GPM
Product use: polyamine and bentonite clay slurry at 1:3 mole ratio on active basis (all dosages are given on an actives basis unless otherwise specified).
Initial Charge: 300 ppm
Maintenance Charge: 3:1 paint:product

### Test 2 (Invention)

Paint: DuPont 706-AC 301® white base coat
Wt.% solids: 59 %
Spray Rate: 2,0 ml/min
Water recirculation rate: 2 GPM
Product use: melamine formaldehyde polycondensate/styrene-acrylate-copolymers at 2.4:1 mole ratio
Initial Charge: 820 ppm
Maintenance Charge: 15:1 paint: product

### Test 3 (Invention)

Paint: Du Pont clear coat RK-3840®
Wt. % solids: 60,0 %
Spray Rate: 2,0 ml/min
water recirculation rate: 2 GPM
Product use: melamine-formaldehyde polycondensate/styrene-acrylate-copolymer at 4:1 mole ratio
Initial Charge: 900 ppm
Maintenance Charge: 10:1 paint:product

### Test 4 (Invention)

Paint: In Mont E12 CK002®
Wt. % solids: 35 %
Spray Rate: 2,0 ml/min
Water recirculation rate: 2 GPM
Product use: melamine-formaldehyde polycondensate/styrene-acrylate copolymers at 3:1 mole ratio
Initial Charge: 70 ppm
Maintenance Charge: 35:1 paint: product

### Discussion of Test Results

Generally, we have found that the laboratory test results have higher detackifier requirements than are actually needed in the field. The discrepancy occurs primarily due to difference in spray rate vs. water flow rate under laboratory and field conditions.

In practice, the polymer works best when dosed in a system having a pH within the range of from 7,5 to 9,5.

Generally, the system should be dosed prior to the detackification process. Pre-dosing appears to allow the formation of floc and adequate dispersion of the detackifier throughout the system.

Preferably, floc within the range of from 0,1 to ≈ 1 µm will be formed. Generally floc with the range of 0,5 - 0,75 µm is found to be most desirable.

The detackifying systems are generally water containing the detackifier compositions.

The detackifier used this invention is a floating/sinking depending on the ratio of the two components, A/B.

The detackifier bonds with paint and removes the stickiness of the paint. Generally, when the invention is working and is appropriately dosed there will be no stickiness to the feel and no paint adhering to any surfaces that come in contact with water and filtration commonly used in paint detackification removal systems.

## Claims

1. A method for detackifying paint in a paint spray booth comprising the steps of dosing a paint spray booth collection system with at least 25 ppm of a melamine-formaldehyde polycondensate and styrene-acrylate copolymer mixture, containing said melamine-formaldehyde polycondensate and said styrene-acrylate copolymer in a mole ratio in the range of from 2:1 to 4:1.

## Patentansprüche

1. Verfahren zum Entkleben von Farbe in einer Farbspritzkabine, das umfaßt die Stufen der Einführung von mindestens 25 ppm einer Mischung aus einem Melamin-Formaldehyd-Kondensatz und einem Styrol-Acrylat-Copolymer, die das Melamin-Formaldehyd-Kondensat und das Styrol-Acrylat-Copolymer in einem Molverhältnis in dem Bereich von 2:1 bis 4:1 enthält, in das Farbspritzkammer-Sammelsystem.

## Revendications

1. Procédé pour rendre non-collante une peinture dans une cabine de peinture au pistolet comprenant les étapes de dosage d'un système collecteur pour cabine de peinture au pistolet avec au moins 25 ppm d'un mélange de polycondensat mélamine-formaldéhyde et de copolymère styrène-acrylate, contenant ledit polycondensat mélamine-formaldéhyde et ledit copolymère styrène-acrylate dans un rapport molaire compris entre 2:1 et 4:1.
